# EUROPEAN PATENT APPLICATION

(11) **EP 3 035 112 A1**
(43) Date of publication of application: **22.06.2016**
(21) Application number: 14833891.6
(22) Date of filing: 01.08.2014
(51) Int. Cl.: G02C 7/10, B05D 1/40, B05D 7/00, B05C 9/12, B05C 11/08

(54) **PHOTOPOLYMERIZATION DEVICE AND METHOD OF MANUFACTURING LENS HAVING PHOTOCHROMIC COATING LAYER**

(30) Priority: 09.08.2013 JP 2013167019
(71) Applicant: Tokuyama Corporation, Shunan-shi, Yamaguchi 745-8648 (JP)
(72) Inventor: ASAHARA, Yoshihiro, Shunan-shi Yamaguchi 745-8648 (JP); MOMODA, Junji, Shunan-shi Yamaguchi 745-8648 (JP)
(74) Representative: Schlief, Thomas P.
(86) International application number: PCT/JP2014/070362
(87) International publication number: WO 2015/019963

(57) **Abstract**

To provide a photopolymerization device which can prevent sealability deterioration of a workpiece accomodation chamber, accomodating the workpiece, due to repeated operations. Provided is a photopolymerization device including: base 16 to which shaft insertion hole 16a is formed; workpiece retaining and rotating shaft section 20 which passes through the shaft insertion hole, relatively moves in an axial direction to the base, is rotatable about the axis, and holds workpiece W at an end part of the section; cover member 30 which has an opening 35 closable by the base and forms workpiece accomodation chamber R, accomodating the workpiece, by contacting the base with a peripheral part 36 of the opening; light irradiation device 40, which irradiates light to the workpiece placed in the workpiece accomodation chamber; and controller 60 which controls relative movement of the base and the cover member, relative movement of the base and the workpiece retaining and rotating shaft section in the axial direction, rotation of the workpiece retaining and rotating shaft section, and light irradiation of the light irradiation device, wherein the controller controls formation of the workpiece accomodation chamber by contacting the base with the peripheral part and rotation of the workpiece in a first region (R1) of the workpiece accomodation chamber, subsequently, the workpiece placement in a second region (R2), closer to the light irradiation device than the first region, by relative movement of the workpiece retaining and rotating shaft section to the base, and light irradiation toward the workpiece placed in the second region by the light irradiation device.

## Description

The present invention relates to photopolymerization devices and methods of manufacturing lenses having photochromic coating layers.

### DESCRIPTION OF THE RELATED ART

Lenses having photochromic coating layers have a characteristic in which their color tone and density vary by irradiating light, thus, they are used as high function lenses for glasses or sunglasses. For instance, with the use of such lenses having photochromic coating layers, said lenses are colored at outdoors or so where light including ultraviolet rays, such as sunlight, are applied and function as sunglasses, while discolored at indoors or so where sunlight is not applied and function as general glasses can be provided.

As a manufacturing method of lenses having the photochromic layer, a method in which the photochromic coating layer is formed on lens base materials, made by plastic or so, is well-known; hereinafter, said method is referred to as a coating method. With the use of the photopolymerization device performing the coating method, for instance, a work piece (a plastic lens), on which coating agent having photochromic properties is dropped in advance, is rotated at a prescribed speed to extend the coating agent all over the work piece, the work piece is further rotated at a high speed and an extra coating agent is shaken off adjusting to a desired membrane thickness, and then the photochromic coating layer is formed on the work piece surface by irradiating light by a light irradiation device. In addition, in order to prevent curing of the extra coating agent shaken off from the work piece surface in the device, a technique in which a step of shaking off the coating agent and a step of curing the coating agent on the work piece surface by the light irradiation device are done in separate rooms is proposed.

[Patent Article 1] JP Patent Application Laid Open No. 2005-296752

### DISCLOSURE OF INVENTION

### PROBLEM TO BE SOLVED BY THE INVENTION

However, with the conventional polymerization device, in a step of shaking off the coating agent, a room where the coating agent is cured is formed by joining a part of a base, exposed to the internal side of the room, and a part of a cover member. Therefore, seal properties of the room may be deteriorated by the coating agent adhered to the joint part or a contacting part. Namely, when shaking off the coating agent, the coating agent may be adhered to the joint part or the contacting part of the base and the cover member, which form the room where the coating agent is cured; there was a problem that the seal properties are lowered when the coating agent is adhered to the joint part. In addition, there was a problem that the coating agent mistakenly adhered to the joint part or so is cured and inner side of the device is stained, when the distance between the base and the light irradiation device is short during irradiating light by the light irradiation device.

In consideration of the recent situations above, objects of the invention is to provide a photopolymerization device which can prevent sealability deterioration of a workpiece accomodation chamber, accomodating the workpiece, due to repeated operations; and to provide a manufacturing method of a lens having the photochromic coating layer.

### MEANS FOR SOLVING THE PROBLEM

In order to solve said objects, the photopolymerization device according to the invention includes: a base to which a shaft insertion hole is formed; a workpiece retaining and rotating shaft section which passes through the shaft insertion hole, relatively moves in an axial direction to the base, is rotatable about the axis, and holds the workpiece at an end part of the workpiece retaining and rotating shaft section; a cover member which has an opening closable by the base and forms a workpiece accomodation chamber, accomodating the workpiece, by contacting the base with a peripheral part of the opening; a light irradiation device, which irradiates light to the workpiece placed in the workpiece accomodation chamber; and a controller which controls relative movement of the base and the cover member, relative movement of the base and the workpiece retaining and rotating shaft section in the axial direction, rotation of the workpiece retaining and rotating shaft section, and light irradiation of the light irradiation device, in which the controller controls formation of the workpiece accomodation chamber by contacting the base with the peripheral part and rotation of the workpiece in a first region of the workpiece accomodation chamber, subsequently, the workpiece placement in a second region, closer to the light irradiation device than the first region, by relative movement of the workpiece retaining and rotating shaft section to the base, and light irradiation toward the workpiece placed in the second region by the light irradiation device.

According to the photopolymerization device of the invention, the workpiece retaining and rotating shaft section is movable in the axial direction relative to the base. Thus, the workpiece retaining and rotating shaft section is relatively moved toward the base and light irradiation is performed by bringing the workpiece close to the light irradiation device. Therefore, adhesion of the coating agent to the contact part of the base and the cover member can be prevented, and sealability deterioration of the workpiece accomodation chamber due to repeated operations can be prevented as well. In addition, light irradiation is performed bringing only the workpiece close to the light irradiation device keeping the distance between the base and the light irradiation device. Thus, even when the coating agent is adhered to parts where the coating agent is not desired to be adhered, a problem of heavily contaminating inside of the device by curing the coating agent can be inhibited.

The controller may control the workpiece placed in the second region to rotate at a second rotational speed. The second rotational speed is slower than a first rotational speed, which is rotational speed in the first region.

Uniformity of the formed photochromic coat layer can be enhanced by not completely stopping the rotation of the workpiece and curing the coating agent at slow rotational speed of the workpiece, when the workpiece is moved to the second region and the coating agent is cured.

For instance, the photopolymerization device of the invention may include an inert gas supply mean, charging inert gas in the workpiece accomodation chamber, and the controller may control the inert gas supply mean to charge inert gas in the workpiece accomodation chamber during the time between when the workpiece accomodation chamber is formed to when light irradiation toward the workpiece by the light irradiation device is started.

The time required for manufacturing is shortened and improvement of production efficiency is attained by implementing charging of inert gas to the workpiece accomodation chamber in parallel with shaking off the extra coating agent and moving the workpiece retaining and rotating shaft section relative to the base.

A manufacturing method of a lens having a photochromic coating layer of the invention includes the following: a step of holding the workpiece, coated with a photopolymerizable coating agent including a photochromic compound, at the end part of the workpiece retaining and rotating shaft section, which passes through the shaft insertion hole of the base, relatively moves in the axial direction to the base, and is rotatable about the axis; a step of forming the workpiece accomodation chamber, accomodating the workpiece, by contacting the base with the peripheral part of an opening of the cover member and closing the opening with the base; a step of rotating the workpiece in the first region of the workpiece accomodation chamber; a step of placing the workpiece in the second region, closer to the light irradiation device, irradiating light to the workpiece, than the first region, by relatively moving the workpiece retaining and rotating shaft section to the base; and a step of curing the coating agent by irradiating light with the light irradiation device toward the workpiece placed in the second region.

Similar with the photopolymerization device above, according to the manufacturing method of lens having the photochromic coating layer of the invention, production efficiency can be improved when the time required for maintenance of the device is shortened by preventing deterioration of sealability of the workpiece accomodation chamber due to repeated operations or preventing a phenomenon in which the coating agent is cured on the surface of the base.

### BRIEF DESCRIPTION OF THE DRAWINGS

- **Fig. 1**: is a cross-sectional schematic drawing of the photopolymerization device of an embodiment of the invention.
- **Fig. 2**: is an operational explanatory drawing of the photopolymerization device shown in Fig. 1.

### PREFERRED EMBODIMENTS OF THE INVENTION

Hereinafter, the photopolymerization device and the manufacturing method of the lens having the photochromic coating layer according to an embodiment of the invention will be described with reference to the drawings.

### The first embodiment

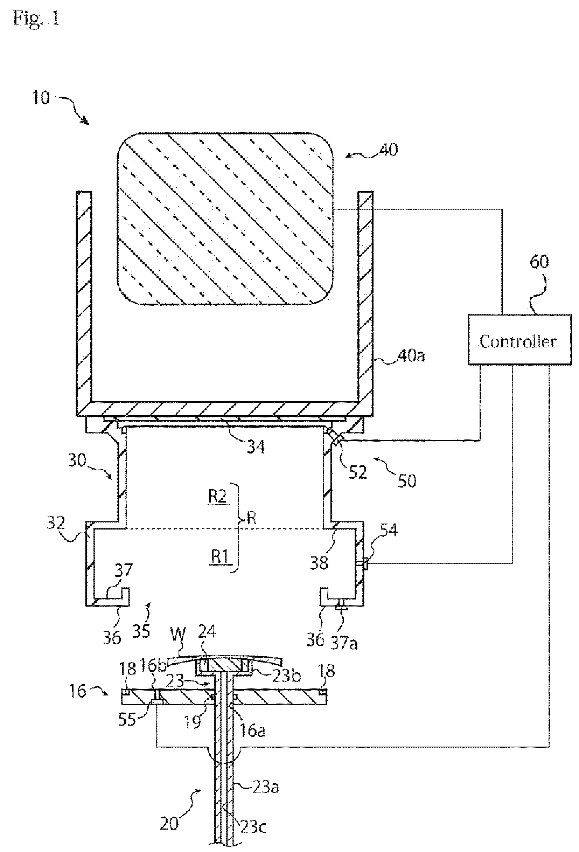

Fig. 1 is a cross-sectional schematic drawing of photopolymerization device 10 according to the first embodiment of the invention. Photopolymerization device 10 includes base 16 in which shaft insertion hole 16a is formed, workpiece retaining and rotating shaft section 20 passing through shaft insertion hole 16a, cover member 30 which forms an accomodation chamber R with base 16, light irradiation device 40 which irradiates light to workpiece W, inert gas supply mean 50 which supply inert gas to the workpiece accomodation chamber R and controller 60 which controls operation of each part.

Base 16 has a flat plate formation, forms shaft insertion hole 16a in the central part of base 16, and positioned below cover member 30. Base 16 is connected to a driving device, which is not shown, and is relatively movable in a vertical direction with respect to cover member 30. Base 16 is equipped with seal member 18 on the edges of base upper surface 16b. At the time when base 16 closes lower opening 35 of cover member 30 forming workpiece accomodation chamber R, seal member 18 joints outer peripheral part 36 of lower opening 35 and seals workpiece accomodation chamber R.

Workpiece retaining and rotating shaft section 20 includes shaft body 23 and suction pad 24. Workpiece retaining and rotating shaft section 20 is relatively movable in an axial direction (vertical direction) to base 16 and rotatable about an axis. Shaft body 23 includes bar member 23a, which can pass through shaft insertion hole 16a of base 16, and a flange part 23b, which is connected to upper end of bar member 23a and projected outward in radial direction of the axis from bar member 23a. A driving device (not shown), such as a rotary motor, which rotates workpiece retaining and rotating shaft section 20 on its axis and a driving device (not shown), such as an air cylinder, which relatively moves workpiece retaining and rotating shaft section 20 to base 16 in the axial direction are connected at lower end of bar member 23a. Seal member 19, such as O-ring, which seals inner peripheral wall of shaft insertion hole 16a and outer peripheral surface of bar member 23a is placed at the inner peripheral wall of shaft insertion hole 16a of base 16.

Suction pad 24 is attached to flange part 23b of shaft body 23. A plurality of fine pores are formed to suction pad 24. Suction force, generated at a not shown suction mean connected at lower edge of workpiece retaining and rotating shaft section 20 via penetration hole 23c passing through the inside of bar member 23a, is transmitted to the fine pores of suction pad 24. Workpiece retaining and rotating shaft section 20 holds workpiece W at its upper end by adsorbing workpiece W on upper surface of suction pad 24.

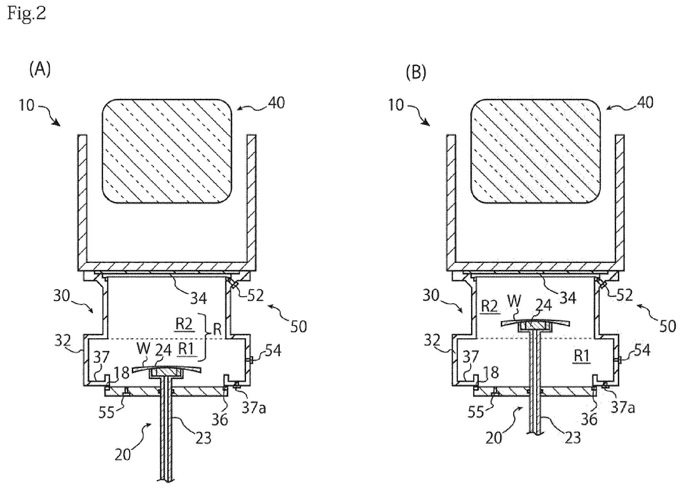

Cover member 30 includes cover frame part 32 having openings at upper and lower directions and permeable plate 34 closing the upper opening of cover frame part 32. Lower opening 35, having an opening diameter larger than outer diameter of workpiece W and smaller than outer diameter of base 16, is formed at lower part of cover member 30. Lower opening 35 is closable by base 16, moves upward by not shown driving device (See Fig. 2(A)). Namely, work piece accomodation chamber R enclosed with cover member 30 and base 16 is formed when seal member 18, provided in surrounding areas of outer periphery of base support surface 16b, joint outer peripheral part 36 of lower opening 35 of cover frame part 32. Work piece W held at upper end of workpiece retaining and rotating shaft section 20 is accomodated in work piece accomodation chamber R. Opening peripheral edge bottom part 37 surrounding lower opening 35 in a ring manner is provided at inner side of lower opening 35 of cover frame part 32. Opening peripheral edge bottom part 37 functions as receiving part which collect the coaitng agent shaken off from the surface of workpiece W. Drane 37a, discharging the collected coating agent from workpiece accomodation chamber R, is formed in opening peripheral edge bottom part 37.

Workpiece accomodation chamber R includes a first region R1 and a second region R2, located above the first region R1 and has shorter distance to light irradiation device 40 than the first region R1. As shown in Fig. 2(A), workpiece W is located in the first region R1 when base 16 moves upward together with workpiece retaining and rotating shaft section 20 and workpiece accomodation chamber R is formed. Subsequently, controller 60 drives the driving device connected to lower edge part of workpiece retaining and rotating shaft section 20 and moves workpiece retaining and rotating shaft section 20 and workpiece W upward, then workpiece W moves from the first region R1 to the second region R2 (See Fig. 2(B)).

Cover frame part 32 provides stepped 38 in vertical direction at a place corresponding to a border between the first region R1 and the second region R2. The horizontal cross-sectional area of the second region R2 is narrower than the horizontal cross-sectional area of the first region R1. Mirror surface which reflect light is formed at inner surface of cover frame 32 at the second region R2, in order to efficiently irradiate light from light irradiation device 40 to workpiece W.

As shown in Fig. 1, light irradiation device 40 includes light emitting part accomodated in housing 40a and placed above cover member 30 and outside workpiece accomodation chamber R. Light generated from light emitting part of light irradiation device 40 permeates permeable plate 34 of cover member 30, incidents inside of workpiece accomodation chamber R and irradiates to workpiece W. Note, a light irradiation mean by light irradiation device 40 may be a well-known irradiation method. For instance, a well-known ultraviolet irradiation mean or a light-emitting diode (LED) may be used.

Inert gas supply mean is formed at upper part of cover frame part 32 and is composed of gas introduction port 52 connected to a not shown gas cylinder and discharge ports 54, 55 formed at lower part of cover frame part 32 and lower part of base 16. Opening and closing of gas introduction port 52 and discharge ports 54, 55 of inert gas supply mean are controlled by controller 60.

Controller 60 controls relative movement of base 16 and cover member 30, relative movement of base 16 and the axis in the axial direction and rotation of workpiece retaining and rotating shaft section 20. In concrete, controller 60 controls the driving device which moves base 16 in vertical direction, the driving device which moves workpiece retaining and rotating shaft section 20 relative to base 16 in the axial direction and the driving device which rotates workpiece retaining and rotating shaft section 20 on its axis; controller 60 controls the movement and rotation of the devices. In addition, controller 60 controls light irradiation device 40 and inert gas supply mean 50. Accordingly, controller 60 controls timing of light irradiation by light irradiation device 40 and an action of charging inert gas to workpiece accomodation chamber R by inert gas supply mean 50. For details of the controls by controller 60 will be explained below.

Hereinafter, movement of photopolymerization device 10 according to the first embodiment of the invention will be described referring to Figs. 1 and 2.

In manufacturing methods of lenses having the photochromic coating layer using photopolymerization device 10, firstly, the coating agent having photochromic properties is coated by dropping and the like on the surface of workpiece W, such as a plastic lens, having a main surface comprising a planner or a convex curved surface. Subsequently, the coating agent coated workpiece W is mounted on upper end of workpiece retaining and rotating shaft section 20 using not shown conveying means. At this time, base 16 and workpiece retaining and rotating shaft section 20 are placed separately downward of cover member 30 as shown in Fig. 1. In addition, controller 60 drives a not shown suction mean connected at lower end part of workpiece retaining and rotating shaft section 20. Thus, workpiece W is held by suction force transmitted via suction pad 24, in a state of workpiece W surface coated with coating agent is turned upward.

Next, controller 60 drives a not shown driving device which drives base 16 and moves base 16 upward to the place shown in Fig. 2(A). Accordingly, seal member 18 of base 16 contacts outer peripheral part 36 of lower opening 35 of cover member 30, and base 16 and cover member 30 form workpiece accomodation chamber R which accomodates workpiece W. At this time, workpiece retaining and rotating shaft section 20 passing through base 16 and workpiece W held with said section 20 move upward together with base 16. At the time when base 16 contacts cover member 30 and stops, workpiece W is placed in the first region R1 in workpiece accomodation chamber R.

Next, controller 60 drives the driving device which rotates workpiece retaining and rotating shaft section 20, and workpiece W placed in the first region R1 in workpiece accomodation chamber R is rotated at a first rotational speed. Thus, the coating agent coated on the surface of workpiece W is extended by centrifugal force, and simultaneously, the extra coating agent is shaken off from the surface of workpiece W. The coating agent shaken off from the surface of workpiece W is mainly collected to opening peripheral edge bottom part 37 of cover member 30 and discharged outside of workpiece accomodation chamber R through drane 37a. Although the first rotational speed suitably adjusted according to the coating agent and workpiece W, it may be 300 to 1500rpm or so. Liquid pooling of the coating agent at workpiece W end part can be efficiently inhibited by rotating with this rotational speed and shaking off the extra coating agent. Controller 60 rotates workpiece W with the first rotational speed for a predetermined time, and subsequently lowers the rotational speed of workpiece W. Note, although viscosity of the coating agent is not particularly limited, it is preferably 50 to 500 mPa/sec at 23 °C. This coating agent includes photopolymerizable monomers and photochromic compounds. According to the device and the method of the present invention, the coating agents over a wide range of viscosity can be used. Namely, even if the coating agent is adhered on various parts of base 16 and cover member 30 due to differences of viscosities and differences between operation conditions (differences between rotational numbers of workpiece W), the coating agent will not adhere to the contacting part of base 16 and cover member 30 in the device and method of the present invention, and the seal property thereof will not be deteriorated.

Next, controller 60 drives the driving device, which relatively moves workpiece retaining and rotating shaft section 20 to base 16, and moves workpiece retaining and rotating shaft section 20 and workpiece W held with the section 20 upward, holding base 16 in a stopped state. Accordingly, workpiece W is placed in the second region R2 of workpiece accomodation chamber R as shown in Fig. 2(B). In addition, controller 60 controls the driving device which rotates workpiece retaining and rotating shaft section 20 to lower the rotational speed of workpiece W from the previously mentioned first rotational speed to the second rotational speed, which is slower than the first rotational speed, when workpiece W moves from the first region R1 to the second region R2.

Controller 60 controls inert gas supply mean 50 during the time between when workpiece accomodation chamber R is formed to when light irradiation by light irradiation device 40 is started, and inert gas supply mean 50 charges inert gas in workpiece accomodation chamber R. Controller 60 opens gas introduction port 52 and introduces inert gas in workpiece accomodation chamber R, and simultaneously opens discharge port 54, 55 discharging internal air and charging inert gas. To shorten the time required for manufacturing, charging of inert gas is preferably implemented in parallel with the rotational step of workpiece W at the first rotational speed and the relative movement step of workpiece retaining and rotating shaft section 20 relative to base 16. It is possible for controller 60 to start introducing inert gas in cover member 30 before workpiece accomodation chamber R is formed, and preliminary inert gas displacement function can be performed to inside of cover member 30.

Next, controller 60 controls light irradiation device 40 and irradiates light to workpiece W placed in the second region R2 and cures the coating agent extended on the surface of workpiece W. Thus, lenses having the photochromic coating layer are manufactured. Note, controller 60 controls the driving device, which rotates workpiece retaining and rotating shaft section 20, making workpiece W to rotate at the second rotational speed during light irradiation to workpiece W. Although the second rotational speed is suitably adjusted depending on the coating agent or workpiece W, for instance, it is preferably 0 to 250 rpm, and to form uniform coat film, it is preferably 20 to 200 rpm, and the more preferably 50 to 150 rpm. Note, curing of the coating agent by irradiating light to workpiece W is performed when workpiece W is placed in the second region R2. However, the rotational speed of the first rotational speed is relatively fast, and thus, light irradiation can be started when workpiece W is rotated at the first rotational speed, if the coating agent is not cured. The time between when workpiece W is rotated at the first rotational speed to when light irradiation is started is shorter the better, since liquid pooling of workpiece W at end part can be inhibited. Therefore, said time between when workpiece W is rotated at the first rotational speed to when light irradiation is started is preferable 0 to 10 sec. Among all, light irradiation is preferably started after shaking off the extra coating agent at the first rotational speed to steadily form a smooth coating layer (the photochromic coating layer). Therefore, light irradiation is preferably performed after rotating workpiece W at the first rotational speed and moving workpiece W in the second region R2. Time from rotating workpiece W at the first rotational speed to irradiating light in the second region R2 is preferably over 0 sec. to 10 sec. or less. Considering easiness of controlling and inhibitory effect of liquid pooling, it is preferably 0.1 to 5 sec. Controller 60 controls light irradiation device 40 and stops light irradiation after irradiating light to workpiece W for a predetermined time.

Then, controller 60 controls the driving device to stop the rotation of workpiece W, and simultaneously controls the other driving device to move base 16 and workpiece retaining and rotating shaft section 20 to the state shown in Fig. 1. Lastly, workpiece W, on which the photochromic layer is formed, is removed from upper end of workpiece retaining and rotating shaft section 20 by the not shown conveying means. Similar operations are repeated thereafter.

With photopolymerization device 10 according to these embodiments, the coating agent is prevented adhering to base 16 and cover member 30, and deterioration of sealability of workpiece accomodation chamber R due to repeated operations can be prevented. Further, light irradiation is performed bringing only workpiece W close to light irradiation device 40 keeping the distance between base 16 and light irradiation device 40. Thus, even when the coating agent is adhered to parts where the coating agent is not desired to be adhered, other than opening peripheral edge bottom part 37, a problem of heavily contaminating inside of the device by curing the coating agent can be inhibited. In addition, the coating agent adhered to base 16 or so can be easily removed, such as by wiping, even it is cured; photopolymerization device 10 is excellent in maintenability.

Further, the photochromic coating layer having high uniformity can be formed on the surface of workpiece W by shaking off the extra coating agent with the high speed rotation (the first rotational speed) of workpiece W in the first region, close to base 16 and far from light irradiation device 40, and subsequently irradiating light with the low speed rotation (the second rotational speed) of workpiece W in the second region, far from base 16 and close to light irradiation device 40. In addition, required operations by photopolymerization device 10, after the rotation of workpiece W at the first rotational speed and before light irradiation by light irradiation device 40, are only to relatively move workpiece retaining and rotating shaft section 20 to base 16 and to move workpiece W from the first region R1 and to the second region R2. Thus, with photopolymerization device 10, it is possible to rotate workpiece W with high speed and shake off the extra coating agent, and promptly cure the coating agent by light irradiation, therefore, a highly uniform photochromic coating layer can be formed on the surface of workpiece W. Further, with the manufacturing method above, rotation of workpiece W after shaking off the coating agent does not stop and movement of workpiece W in the axial direction and light irradiation to workpiece W are performed maintaining rotation with dropping the number of rotation. Thus, liquid pooling of the coating liquid on the edge of workpiece W is inhibited and the photochromic coating layer having high uniformity can be obtained. Thus obtained lens eventually has a wide effective range of usage, and that its design is facilitated.

The above embodiment is an example of an embodiment of the invention and does not limit the present invention. It is needless to say that there are other embodiments which differ from the above embodiment. For instance, seal member 18, sealing gap between cover member 30 and base 16, can be mounted on outer peripheral part 36 of cover member 30 rather than base upper surface 16b. Opening diameter of lower opening 35 of cover member 30 can be the same or slightly larger than the outer diameter of base 16; workpiece accomodation chamber R may be formed by the contact between outer peripheral surface of base 16 and inner surface of lower opening 35.

A partition plate which partition the first region R1 and the second region R2 off can be mounted in workpiece accomodation chamber R. In this case, the partition plate may be horizontally inserted in workpiece accomodation chamber R after workpiece W is moved to the second region R2, or the partition plate can be moved in vertical direction together with workpiece retaining and rotating shaft section 20. The partition plate which partition the first region R1 and the second region R2 off can inhibit incident of light from photopolymerization device 10 in the first region R1. Thus, the coating agent adhered to base 16 or so is maintained in uncured state or so, and that said agent can be easily removed by wiping or so. In addition, inert gas such as nitrogen can be charged at least in the second region R2 by setting up such partition plate. Therefore, used amount of the inert gas can be reduced and also is possible to shorten the production time.

In manufacturing process, dropping of the coating agent on the surface of workpiece W can be performed after workpiece W is placed on the upper end of workpiece retaining and rotating shaft section 20. Inert gas, used in the charging process of inert gas, is not limited to nitrogen; the other inert gas such as argon can be used. Workpiece W used in manufacturing may be what is called a semi-finish product, in which back face is processed after the photochromic coating layer is formed, or may be a finishing lens or a finish lens. The coating agent coated on the surface of workpiece W is not particularly limited, if it is a coating liquid having a photopolymerizable property including a photochromic compound.

### DESCRIPTION OF THE CODES

10: a photopolymerization device
16: a base
16a: a shaft insertion hole
W: a workpiece
R: a workpiece accomodation chamber
R1: the first region
R2: the second region
20: a workpiece retaining and rotating shaft section
30: a cover member
35: a lower opening
40: a light irradiation device
50: an inert gas supply mean
60: a controller

## Claims

1. A photopolymerization device comprising:
a base to which a shaft insertion hole is formed;
a workpiece retaining and rotating shaft section which passes through the shaft insertion hole, relatively moves in an axial direction to the base, is rotatable about the axis, and holds the workpiece at an end part of the workpiece retaining and rotating shaft section;
a cover member which has an opening closable by the base and forms a workpiece accomodation chamber, accomodating the workpiece, by contacting the base with a peripheral part of the opening;
a light irradiation device, which irradiates light to the workpiece placed in the workpiece accomodation chamber; and
a controller which controls relative movement of the base and the cover member, relative movement of the base and the workpiece retaining and rotating shaft section in the axial direction, rotation of the workpiece retaining and rotating shaft section, and light irradiation of the light irradiation device,
wherein the controller controls
formation of the workpiece accomodation chamber by contacting the base with the peripheral part and
rotation of the workpiece in a first region of the workpiece accomodation chamber, subsequently,
the workpiece placement in a second region, closer to the light irradiation device than the first region, by relative movement of the workpiece retaining and rotating shaft section to the base, and
light irradiation toward the workpiece placed in the second region by the light irradiation device.

2. The photopolymerization device as set forth in claim 1, wherein the controller controls the workpiece placed in the second region to rotate at a second rotational speed, which is slower than a first rotational speed, rotational speed in the first region.

3. The photopolymerization device as set forth in claim 1 or 2, wherein
the device comprises an inert gas supply mean, charging inert gas in the workpiece accomodation chamber, and
the controller controls the inert gas supply mean to charge inert gas in the workpiece accomodation chamber during the time between when the workpiece accomodation chamber is formed to when light irradiation toward the workpiece by the light irradiation device is started.

4. A manufacturing method of a lens having a photochromic coating layer comprising:
a step of holding the workpiece, coated with a photopolymerizable coating agent including a photochromic compound, at the end part of the workpiece retaining and rotating shaft section, which passes through the shaft insertion hole of the base, relatively moves in the axial direction to the base, and is rotatable about the axis;
a step of forming the workpiece accomodation chamber, accomodating the workpiece, by contacting the base with the peripheral part of an opening of the cover member and closing the opening with the base;
a step of rotating the workpiece in the first region of the workpiece accomodation chamber;
a step of placing the workpiece in the second region, closer to the light irradiation device, irradiating light to the workpiece, than the first region, by relatively moving the workpiece retaining and rotating shaft section to the base; and
a step of curing the coating agent by irradiating light with the light irradiation device toward the workpiece placed in the second region.
